# EUROPÄISCHE PATENTANMELDUNG

(11) **EP 2 371 443 A1**
(43) Veröffentlichungstag der Anmeldung: **05.10.2011**
(21) Anmeldenummer: 11151550.8
(22) Anmeldetag: 20.01.2011
(51) Int. Cl.: B01D 53/04

(54) **Verfahren und Vorrichtung zur Trocknung eines Feststoffes**

(30) Priorität: 25.01.2010 DE 102010001180
(71) Anmelder: Helmholtz-Zentrum für Umweltforschung GmbH-UFZ, 04318 Leipzig (DE)
(72) Erfinder: Roland, Ulf, 04158, Leipzig (DE); Kraus, Markus, 04318, Leipzig (DE); Kopinke, Frank-Dieter, 04109, Leipzig (DE); Trommler, Ulf, 04571 Rötha (DE); Holzer, Frank, 04299, Leipzig (DE)
(74) Vertreter: Gulde Hengelhaupt Ziebig & Schneider

(57) **Zusammenfassung**

Die Erfindung betrifft ein Verfahren zur Entfernung einer adsorbierten Substanz (13) von einem Feststoff (10), der einen Beladungsgradienten aufweist, durch einen inversen thermo-chromatographischen Puls (ITCP), der durch Einstrahlung von elektromagnetischen Wellen im Hochfrequenz-Bereich in dem Grenzbereich zwischen beladenem und unbeladenem Feststoff initiiert wird, wobei die Gasflüsse bei der Beladung im Rahmen eines Gastrocknungsvorgangs und bei der Entladung im Rahmen des Regenerierungsvorgangs einander entgegengesetzt sind. Besonders prädestiniert ist das erfindungsgemäße Verfahren zur Trocknung eines mit Wasser (13) beladenen Trocknungsmittels (10) zum Zwecke der Regenerierung.

## Beschreibung

Die Erfindung betrifft ein Verfahren zur Entfernung einer adsorbierten Substanz von einem Feststoff, vorzugsweise ein Verfahren zur Trocknung eines Feststoffes, der einen Beladungsgradienten, vorzugsweise einen Feuchtegradienten, aufweist, durch einen inversen thermo-chromatographischen Puls (ITCP), der durch Einstrahlung von elektromagnetischen Wellen im Hochfrequenz-Bereich in den Grenzbereich zwischen beladenem und unbeladenem Feststoff initiiert wird. Besonders prädestiniert ist das erfindungsgemäße Verfahren für die Trocknung eines mit Wasser beladenen Trocknungsmittels zum Zwecke der Regenerierung, wobei die Gasflüsse bei der Beladung im Rahmen eines Gastrocknungsvorgangs und bei der Entladung im Rahmen des Regenerierungsvorgangs einander entgegengesetzt sind.

Die Trocknung von Materialien, insbesondere von Feststoffen und Gasen, ist in vielen Bereichen der Technik von sehr hoher Relevanz. Genannt seien beispielsweise die Trocknung von Textilien, Lebensmitteln, Holz oder Baumaterialien sowie von Gasen wie Druckluft, Erdgas oder Biogas. Bei der Gastrocknung werden die feuchten Gase oft über vorzugsweise poröse Feststoffe geführt, die in der Lage sind, Wasser in größerem Umfang, d.h. bis zu einigen Prozent ihrer Masse, aufzunehmen. Als Trocknungsmittel oder Adsorber werden beispielsweise bestimmte Molekularsiebe, Silikagele oder andere oxidische Materialien eingesetzt. Im Folgenden werden dann die Begriffe Trocknungsmittel und Adsorber als Synonyme verwendet.

In vielen technischen Prozessen werden die zu trocknenden Feststoffe auch über einen Gasstrom getrocknet, der dann wiederum über ein Trocknungsmittel geleitet und somit entfeuchtet werden muss, wenn er für den Trocknungsprozess erneut eingesetzt werden soll. Insofern wird das Problem der Trocknung sowohl von Gasen als auch von Feststoffen in vielen technischen Anwendungsbereichen auf die Trocknung eines Adsorbermaterials mit hoher Wasseraufnahmekapazität zurückgeführt. Um einen quasi-kontinuierlichen Trocknungsprozess zu ermöglichen, ist die Trocknung, d.h. die Regenerierung, des Trocknungsmittels von essentieller Bedeutung. Dieser Verfahrensschritt bestimmt oftmals die Effizienz des Gesamtverfahrens.

Für Adsorption und die nachfolgende Desorption aus Adsorbermaterialien im Regenerierungsschritt im Allgemeinen und Wasserdesorption aus Trocknungsmitteln im Besonderen sind nach dem Stand der Technik die Druckwechselverfahren und die Temperaturwechselverfahren etabliert.

Im ersten Fall wird durch die Absenkung des entsprechenden Partialdruckes der vorher adsorbierte Stoff in die Gasphase überführt. Dies geschieht in der Regel durch Erniedrigung des Gesamtdruckes, d.h. Evakuieren. Gerade im Fall der Trocknung nach Wasseradsorption arbeiten Druckwechselverfahren ineffizient, sobald Trocknungsmittel mit hoher Effizienz, d.h. großer Adsorptionsenthalpie für Wasser, verwendet werden. Beispiele für derartige effiziente Trocknungsmittel sind Zeolithe.

Als Alternative wird bei den Temperaturwechselverfahren das Adsorptionsgleichgewicht durch eine Temperaturerhöhung in Richtung Desorption verschoben und somit eine Überführung des Adsorbats in die Gasphase initiiert. Temperaturwechselverfahren sind meist einfacher zu realisieren, allerdings stellt hier die Erwärmung von Feststoffschüttungen ein verfahrenstechnisches Problem dar.

Während die Aufheizung fluider Medien technisch sehr gut gelöst ist, besteht ein Bedarf an Verfahren, die eine homogene und gut steuerbare Erwärmung von Feststoffbetten ermöglichen. Ursache hierfür sind die in der Regel fehlende Durchmischung des zu erwärmenden Mediums und dessen häufig geringe effektive Wärmeleitfähigkeit. Aus diesem Grund ist der Einsatz von Wandheizungen, Heizplatten oder Heizstäben für diese Systeme nur bedingt geeignet.

Im Bereich der Verfahrenstechnik hat sich die Aufheizung von Feststoffbetten über einen Trägergasstrom etabliert. Diese Methode weist jedoch den Nachteil auf, dass durch die starre Verknüpfung von Gasfluss und zu übertragender Wärmemenge oft die gewünschte Einstellung von hohen Desorbatkonzentrationen nicht möglich ist. Beispielhaft genannt zur Illustration dieser Einschränkung sei die Desorption von Schadstoffen aus einem Adsorberbett, wo eine Aufkonzentrierung zum Zwecke der Kombination mit einer katalytischen Nachverbrennung gewünscht wäre, aber nach dem Stand der Technik häufig nicht realisiert werden kann. Im Fall der Trocknung ist eine Kondensatabscheidung im Anschluss an die Desorption aus dem Trocknungsmittel sinnvoll, was eine hohe Wasserdampfkonzentration im Abstrom für eine effiziente Arbeitsweise erfordert. Weiterhin nachteilig für die konventionelle Erwärmungsmethode über den Trägergasstrom bei Trocknungsprozessen ist, dass auf Grund der großen Adsorptionsenthalpie des Wassers und der geringen Wärmekapazität des Gasstromes eine große Gasmenge notwendig ist, um die gewünschte Wasserfreisetzung in die Gasphase zu erreichen.

In den letzten Jahren sind als vielversprechende Alternative direkte Heizverfahren, die nicht an einen Stoffstrom gebunden sind, entwickelt worden. So hat sich bisher hauptsächlich die Mikrowellen-Erwärmung durchgesetzt, die auf der Wechselwirkung eines elektrischen Wechselfeldes (Frequenzen im GHz-Bereich) mit im Medium vorhandenen molekularen Dipolen, insbesondere Wasser, beruht. Für die eingangs genannten technischen Prozesse besitzt die Mikrowellen-Heizung jedoch entscheidende Nachteile. Einerseits ist die Eindringtiefe der Strahlung in das zu erwärmende Material häufig sehr gering (im Bereich von einigen Millimetern oder Zentimetern), so dass keine homogene Erwärmung größerer Volumina erzielt werden kann. Andererseits ist für viele Stoffe der Energieeintrag ineffizient, da ein großer Teil der eingestrahlten Energie reflektiert wird. Insbesondere bei Trocknungsprozessen ist die Abnahme der Materialfeuchte mit einer drastischen Veränderung der dielektrischen Eigenschaften des Feststoffes und damit des dielektrischen Energieeintrages verbunden, wodurch eine kontinuierlich effiziente Mikrowellen-Erwärmung technisch nicht erreicht werden kann.

Als innovative Alternative wurde in den letzten Jahren die direkte dielektrische Erwärmung von Feststoffen mit Hochfrequenz(HF)-Energie entwickelt. Dabei werden elektromagnetische Wellen mit Frequenzen im oberen kHz- bzw. im MHz-Bereich in das zu erwärmende Medium eingestrahlt. Durch die Verwendung eines elektronischen Anpassnetzwerkes, einer so genannten Matchbox, kann die sich verändernde Impedanz des Mediums dem Innenwiderstand des HF-Generators angepasst und damit eine Reflexion von HF-Energie vom zu erwärmenden Material verhindert werden.

In der Praxis haben sich Molekularsiebe, wie beispielsweise Zeolithe, als effektive Trocknungsmittel etabliert. Während mit Mikrowellen nur einige Zeolithe ausreichend erwärmt werden können, ist die HF-Erwärmung für praktisch alle Zeolithe möglich. Eine Ursache hierfür ist der im Hochfrequenz-Bereich im Unterschied zum Mikrowellen-Bereich dominierende Elementarprozess einer lonenmigration, der zur Aufheizung des Materials führt. Insbesondere ist der Grad der Energieeinkopplung zwar sowohl im Mikrowellen- als auch im Hochfrequenz-Bereich von der Feuchte des Feststoffes abhängig, die zugrunde liegenden Mechanismen unterscheiden sich jedoch signifikant. Während im Mikrowellen-Bereich die Orientierungspolarisation für den dielektrischen Verlust bestimmend ist, der dann zur Erwärmung führt, ist im Hochfrequenz-Bereich die Bewegung der Zeolith-Kationen in ihrer Wechselwirkung mit dem Wasser für die Erwärmung bestimmend.

Gegenüber einer homogenen dielektrischen Erwärmung des Trocknungsmittels hat eine örtlich selektive Erwärmung einige verfahrenstechnische und insbesondere auch energetische Vorteile. Eine Methode, diesen Vorteil zu nutzen, ist der Einsatz eines thermo-chromatographischen Pulses (TCP), wie er in DE 10 2006 062 651 beschrieben wird. Diese Druckschrift beschreibt eine Methode, bei der durch das Einbringen eines Übertragungsmediums in ein Feststoffbett ein dieses durchlaufender gekoppelter Stoffstrom-Temperatur-Puls (TCP) initiiert wird. Nach der Injektion oder anderweitigen Einbringung des Kopplungsmediums in den Anstrombereich durchwandert dieser TCP das gesamte Feststoffbett. Durch den TCP kann die Desorption eines vorher adsorbierten Stoffes aus dem Feststoffbett hervorgerufen werden. Nachteilig an diesem Verfahren ist vor allem, dass ein zusätzliches Übertragungs- bzw. Kopplungsmedium benötigt und auf das Feststoffbett aufgetragen wird und dass der einmal initiierte TCP das gesamte Feststoffbett durchwandern muss.

Bei Adsorptionsprozessen im Allgemeinen und Trocknungsprozessen im Besonderen wird in der Praxis nicht das gesamte Feststoffbett bis zum Durchbruch der zu adsorbierenden Stoffe, z.B. des Wassers, beladen, weil sonst im Abstrom die entsprechenden Stoffe in nicht akzeptablen Konzentrationen auftreten würden. Stattdessen wird die Kapazität des Adsorberbettes bewusst nur unvollständig ausgenutzt, um einen Durchbruch zu vermeiden. Das bedeutet, dass neben dem beladenen Bereich des Feststoffbettes auch ein unbeladener Bereich vorhanden ist, der theoretisch nicht regeneriert werden muss, praktisch aber mit regeneriert wird. Durch die an sich nicht benötigte Regenerierung des unbeladenen Teils sind derartige Trocknungsverfahren zeitaufwendig und energetisch sowie bezüglich der aufzuwendenden Kosten ineffektiv. Ein weiteres Problem liegt darin, dass die Beladungskapazität eines Feststoffbettes je nach Anwendung unterschiedlich weit ausgenutzt wird und der Übergang von der Beladung zur Nichtbeladung von außen kaum zu lokalisieren ist, d.h. von außen nicht ersichtlich ist, welcher Bereich regeneriert werden muss. Eine Detektion des Grenzbereiches beispielsweise über Sensoren kommt oft nicht in Frage, weil dadurch die Flexibilität der Anlage deutlich eingeschränkt würde und darüber hinaus zusätzliche Kosten entstünden.

Es ist daher die Aufgabe der vorliegenden Erfindung, ein Verfahren zur Freisetzung einer adsorbierten Substanz und vorzugsweise zur Trocknung von Feststoffen bereitzustellen, das die Nachteile im Stand der Technik überwindet und möglichst kostengünstig sowie zeitlich und energetisch effizient ist.

Die Aufgabe wird mit einem Verfahren und einer Vorrichtung gemäß den Hauptansprüchen gelöst. Bevorzugte Ausgestaltungen sind in den Unteransprüchen beschrieben.

Die Erfindung betrifft ein Verfahren zur Entfernung einer adsorbierten Substanz von einem Feststoff in einem Feststoffbett, welches mindestens einen Anstrombereich zum Einströmen eines Trägergases und mindestens einen Abstrombereich zum Ausströmen des Trägergases aufweist, wobei sich zwischen dem Anstrombereich und dem Abstrombereich ein einen Feststoff enthaltendes Strömungsbett befindet und entlang (in Längsrichtung) des Strömungsbettes in dem Feststoff ein Beladungsgradient der mindestens einen adsorbierten Substanz ausgebildet ist, wobei der Feststoff nach der Beladung mindestens einen Bereich maximaler Beladung, einen Bereich mit abfallender Beladung und einen unbeladenen Bereich und damit mindestens einen Grenzbereich beladener/unbeladener Feststoff aufweist, wobei das Feststoffbett mit einem trockenen Trägergas durchströmt wird, wobei das Trägergas in entgegengesetzter Richtung des abfallenden Beladungsgradienten strömt und gleichzeitig das Feststoffbett zumindest teilweise mit hochfrequenter elektromagnetischer Strahlung (HF-Strahlung) bestrahlt wird. Das erfindungsgemäße Verfahren basiert auf einer gezielten lokalen Temperaturerhöhung in dem Grenzbereich beladener/unbeladener Feststoff mittels HF-Strahlung bei gleichzeitigem Einströmen eines Trägergases entgegen der Beladungsrichtung, wodurch ein inverser thermo-chromatographischer oder inverser gekoppelter Stoffstrom-Puls (inverser TCP bzw. ITCP) initiiert wird. Der Übergang von dem beladenen Bereich in den unbeladenen Bereich im Feststoff ist nicht scharf, sondern stellt einen Bereich mit einer starken Konzentrationsabnahme, mit einem Beladungsgradienten, dar. Somit sind entlang der Längsrichtung des Feststoffbettes mindestens drei verschiedene Bereiche unterscheidbar, und zwar ein Bereich mit nahezu konstanter Konzentration (Beladungszone), ein Übergangsbereich mit starker Konzentrationsabnahme in Beladungsrichtung (Übergangszone) und ein praktisch unbeladener Bereich (Reservezone). Mittels des erfindungsgemäßen Verfahrens wird die Regenerierung genau in dem Grenzbereich der Übergangszone zur Reservezone gestartet, ohne dass die genaue Lokalisierung dieses Grenzbereichs von außen nötig ist. Vorteilhafterweise wird dabei eine Erwärmung nur der beiden beladenen Zonen (Beladungszone und Übergangszone) ermöglicht und gleichzeitig verfahrensimmanent die Position der Übergangszone im Feststoffbett detektiert. Die vorliegende Erfindung stellt somit ein Verfahren mit einer wesentlichen Effizienzsteigerung gegenüber dem Stand der Technik dar.

Durch die Einkopplung von HF-Strahlung kommt es also im Grenzbereich beladener/unbeladener Feststoff zu einer schnellen dielektrischen Erwärmung ausgehend von einer Basistemperatur, vorzugsweise der Umgebungstemperatur, bei welcher die mindestens eine Substanz in der Regel am Feststoff adsorbiert vorliegt. Bevorzugte lokale Aufheizraten im Grenzbereich betragen mehr als 5 K/min. Durch die schnelle Erwärmung werden im Feststoffbett vorzugsweise hohe lokale Temperaturgradienten von mindestens 5 K/cm erzeugt. Die lokale Erwärmung erfolgt bevorzugt, d.h. örtlich selektiv, genau im Grenzbereich unbeladener/beladener Feststoff, da sich ein Bereich mittlerer Beladung im Vergleich sowohl zum unbeladenen Feststoff als auch zum vollständig beladenen Feststoff im entsprechenden Frequenzbereich schneller dielektrisch erwärmt. Diese besondere Selektivität ist ein Grundelement des erfindungsgemäßen Verfahrens. Durch die lokale Erwärmung kommt es punktuell bzw. in einem scharf abgegrenzten Bereich zur Desorption und Freisetzung der adsorbierten Substanz in den Gasstrom, was mit einer Verringerung der Einkopplung elektromagnetischer Energie und hohen Abkühlraten von vorzugsweise mehr als 5 K/min einhergeht. Durch die fortlaufende Einkopplung elektromagnetischer Energie in das Festbett, die Aufheizung und Desorption sowie den gleichzeitig dem Beladungsgradienten entgegen strömenden Trägergasstrom bewegt sich das Zentrum der lokalen Erwärmung zusammen mit der desorbierten Substanz durch das Feststoffbett. Es kommt also zur Initiierung eines ITCP, der sich aus der Übergangszone in Richtung der Beladungszone bewegt. Dort wird durch die Erwärmung erneut die adsorbierte Substanz desorbiert und mit dem Trägergasstrom weitertransportiert. Das Verfahren ist also dadurch gekennzeichnet, dass unter bestimmten Bedingungen, wie entsprechende dielektrische Eigenschaften von adsorbierter Substanz und Feststoff sowie Gasfluss, sehr große Temperaturunterschiede zwischen Basistemperatur und Spitzentemperatur im ITCP erreicht werden. Erfindungsgemäße Temperaturunterschiede liegen vorzugsweise im Bereich von 50 bis 300 K, besonders bevorzugt zwischen 100 und 250 K. Die Laufzeit des Pulses durch das Feststoffbett kann dabei sehr gut durch einen Prozess beschrieben werden, dessen charakteristische Aktivierungsenergie eng mit der Adsorptionsenthalpie der adsorbierten Substanz an dem Feststoff korreliert ist. Aus diesem Grund verringert sich die Laufzeit des ITCP grundsätzlich mit steigender Basistemperatur und steigender Spitzentemperatur. Vorzugsweise wird als adsorbierbare Substanz eine Flüssigkeit bzw. eine in der Gasphase in Dampfform vorliegende Flüssigkeit, besonders bevorzugt Wasser, von dem Feststoff desorbiert. Bei dem erfindungsgemäßen Verfahren handelt es sich demnach vorzugsweise um ein Verfahren zur Trocknung von Feststoffen in einem Feststoffbett. Zusammen mit der Flüssigkeit selbst können auch andere sorbierbare Substanzen durch das Feststoffbett transportiert werden (thermo-chromatographischer Effekt). Obwohl der ITCP prinzipiell auch durch andere adsorbierte Stoffe initiiert werden kann und diese nicht unbedingt Flüssigkeiten sein müssen, wird im Folgenden wegen der bevorzugten Anwendung im Bereich der Trocknung von adsorbierter Flüssigkeit bzw. Flüssigkeit oder Adsorbat gesprochen, ohne dass dabei andere adsorbierbare Stoffe mit den entsprechenden für den ITCP relevanten Eigenschaften ausgeschlossen wären.

Die Tatsache, dass die verstärkte Erwärmung durch die Einkopplung der HF-Strahlung in den beladenen Adsorber praktisch nur auf einer Seite des ITCP möglich ist, führt zu einer automatischen Wanderung des ITCP mit dem Gasstrom in Richtung steigender Beladung, d.h. steigender Konzentration des Adsorbats auf dem Feststoff. Der ITCP wandert also entgegen dem abfallenden Beladungsgradienten durch den Feststoff. Dabei kann die HF-Strahlung entweder über den gesamten Bereich des Feststoffbettes oder nur bereichsweise in Höhe des Pulses eingekoppelt werden. Bei einer bereichsweisen Einkopplung der HF-Strahlung muss das Mittel zur Erzeugung der HF-Strahlung mit dem ITCP mitbewegt werden. Durch die dielektrische Erwärmung kommt es erfindungsgemäß zu einem sukzessiven und kontinuierlichen Entfernen, d.h. einer Desorption der mindestens einen Flüssigkeit aus dem Feststoff in der Beladungszone, wobei die in die Gasphase überführte und vom Feststoff desorbierte Flüssigkeit durch den Trägergasstrom abgeführt und somit aus dem System entfernt wird. Vorteilhafterweise wird eine Readsorption der bereits desorbierten Flüssigkeit verhindert, da der Abtransport mit dem Trägergasstrom in Richtung steigender Beladung des Adsorbers erfolgt und die Beladungskapazität in Strömungsrichtung des Trägergases auf Grund der Steilheit der Adsorptionsisotherme ausgeschöpft ist. Damit kann praktisch keine erneute Adsorption der ausgetragenen vorher adsorbierten Komponenten bzw. speziell des Wassers erfolgen.

Ein Bereich mit einem "Beladungsgradienten" im Sinne der Erfindung ist ein Bereich mit einer inhomogenen, in diesem Fall sinkenden Konzentrationsverteilung in Gasstromrichtung eines Stoffes, der an dem Feststoff adsorbiert oder gebunden wird. Dabei kann die Konzentrationsabnahme mit beliebiger Steilheit erfolgen. Vorzugsweise ist der erfindungsgemäße Beladungsgradient entlang der Längsachse eines Feststoffbettes ausgebildet. Der Beladungsgradient wird auf der Seite mit der höheren Konzentration vorzugsweise von einem Bereich maximaler Beladung begrenzt. Die "maximale" Beladung ist die theoretisch maximal mögliche Beladung des Feststoffes bei der entsprechenden Temperatur, wobei sich der Absolutwert aus der Art des Feststoffes, d.h. dem Adsorptionsvermögen des Feststoffes für die Substanz, der Substanz selbst sowie deren Konzentration in der Gasphase während der Beladung ergibt. Bevorzugte Bereiche der maximalen Beladung des Feststoffes mit dem mindestens einen Adsorbat liegen bei mehr als 5 Ma.-%, vorzugsweise mehr als 10 Ma.-%, weiter bevorzugt mehr als 20 Ma.-%, jeweils bezogen auf die Trockenmasse des Feststoffes. Auf der Seite des Beladungsgradienten mit der geringsten Konzentration in Bezug auf die Konzentration im Gradienten befindet sich vorzugsweise ein unbeladener Bereich. Unter einem "unbeladenen" Bereich wird erfindungsgemäß der Bereich des Feststoffs verstanden, bei dem die Konzentration des Adsorbats kleiner als 5 Ma.-%, vorzugsweise kleiner als 1 Ma.-% und besonders bevorzugt kleiner als 0,5 Ma.-%, bezogen auf die Trockenmasse des Feststoffs, ist. Vorzugsweise erstreckt sich der Beladungsgradient über weniger als 40 %, weiter bevorzugt weniger als 30 % und besonders bevorzugt weniger als 20 % der Längserstreckung des im Feststoff ausgebildeten Strömungskanals. Der Bereich maximaler Beladung erstreckt sich vorzugsweise über mehr als 50 % und besonders bevorzugt mehr als 70 % der Längserstreckung des im Feststoff ausgebildeten Strömungskanals. Der unbeladene Bereich erstreckt sich vorzugsweise über weniger als 40 % und besonders bevorzugt weniger als 20 % der Längserstreckung des im Feststoff ausgebildeten Strömungskanals.

In einer bevorzugten Ausführungsform der Erfindung weist der Grenzbereich beladener/unbeladener Feststoff eine zylindrische Form auf, in der der Konzentrationsgradient parallel zur Zentralachse verläuft. Unter einem "Grenzbereich" wird erfindungsgemäß jede beliebige geometrische Form verstanden, die sich zwischen dem beladenen und dem unbeladenen Bereich im Feststoff ausbilden lässt und in der ein Konzentrationsgradient auftritt.

Unter "Feststoff" wird erfindungsgemäß jedes beliebige Material verstanden, das bei Raumtemperatur und/oder bei der Adsorptionstemperatur einen festen Aggregatzustand aufweist. Dabei kann der Feststoff jede beliebige Form annehmen. Beispielsweise kann der Feststoff als ausgedehnter räumliche Körper oder als Schüttung von Partikeln, Körnern oder Granulat vorliegen, welche vorzugsweise in ein durchströmbares Gefäß eingebracht wird. Bei ausgedehnten räumlichen Körpern sind erfindungsgemäß Körper mit einer ausgeprägten Längsachse, wie beispielsweise Zylinder oder Balken bevorzugt. Ist bei einem räumlichen Körper keine Längsachse vorhanden, wird zur Durchführung des Verfahrens eine Raumachse als Längsachse festgelegt. Bei Schüttungen aus Partikeln, Körnern oder Granulat sind Partikel-, Korn- oder Granulatgrößen im Millimeterbereich bevorzugt. Erfindungsgemäß besonders geeignet sind Partikel-, Korn- oder Granulatgrößen im Bereich von 0,1 bis 10 mm, vorzugsweise von 1 bis 5 mm.

Bevorzugte Feststoffe im Rahmen der Erfindung sind Textilien, Lebensmittel, Holz, Baumaterialien wie Sand, Lehm, Kies, Zement oder Beton oder Adsorptionsmittel für Gase, Dämpfe und Flüssigkeiten. Besonders bevorzugt ist als erfindungsgemäßer Feststoff ein Trocknungsmittel für Gase. Geeignete Trocknungsmittel für Gase sind beispielsweise poröse Materialien, vorzugsweise ein geeignetes γ-Aluminiumoxid, poröse Metalloxide, Silikagel, Aktivkohle, Zeolithe oder Mischungen aus diesen Stoffen. Erfindungsgemäß besonders bevorzugt sind hydrophile Zeolithe, insbesondere NaY-, NaX (13X)-, KA (3A)-, NaA (4A) oder CaA (5A)-Zeolithe. Besonders bevorzugt werden die insbesondere für die Trocknung prädestinierten Zeolithe NaY und 3A verwendet.

Vorzugsweise weist das adsorbierende Material bzw. das Trocknungsmittel für Gase eine innere Oberfläche größer als 80 m²/g, vorzugsweise größer als 200 m²/g auf. Eine geeignete Porosität liegt im Bereich zwischen 0,1 und 0,9, vorzugsweise zwischen 0,2 und 0,7.

In einer bevorzugten Ausführungsform der Erfindung weist der Feststoff für die Energieeinkopplung durch HF-Strahlung bei nicht maximaler Beladung mit der mindestens einer Substanz ein ausgeprägtes Optimum auf. Erfindungsgemäß besonders geeignet sind also grundsätzlich alle Stoffe, bei denen der dielektrische Verlust für elektromagnetische Wellen im erfindungsgemäß verwendeten HF-Bereich als Funktion der Feuchte ein Maximum aufweist, d.h. eine mittlere Feuchte existiert, bei der die dielektrische Erwärmung stärker als bei der Maximalfeuchte ist. Vorzugsweise beträgt der dielektrische Verlustfaktor, der die Energieabsorption in das System beschreibt, in diesem Bereich mindestens das Doppelte und besonders bevorzugt das Dreifache des Wertes bei maximaler Beladung. Das bedeutet also, dass die Einkopplung der HF-Strahlung in den Feststoff und damit die Erwärmung bei nicht maximaler Beladung mit der mindestens einen Substanz vorzugsweise mindestens doppelt so gut und besonders bevorzugt mindestens dreimal so gut wie bei maximaler Beladung ist.

Diese überraschende Eigenschaft bestimmter beladener Feststoffe erlaubt die Etablierung und gerichtete Bewegung des ITCP. Denn auf Grund der überraschenden Einkopplungscharakteristik der Materialien wie beispielsweise der Zeolithe in Abhängigkeit vom Wassergehalt erfolgt unter Einstrahlung von HF-Energie eine äußerst ausgeprägte selektive Erwärmung in der Übergangszone mit einer Feuchte zwischen 0 Ma.-% und Maximalbeladung. Besonders geeignete HF-Strahlung liegt im Frequenzbereich von 100 kHz bis 500 MHz, bevorzugter im Bereich von 500 kHz bis 100 MHz, noch bevorzugter im Bereich von 1 MHz bis 50 MHz und besonders bevorzugt im Bereich von 1 MHz bis 30 MHz. In der Praxis ist die Nutzung von ISM-Frequenzen im entsprechenden Bereich bevorzugt. Da sich die Impedanz des Feststoffbettes während der Trocknungsphase kontinuierlich ändert, wird durch ein elektronisches Anpassnetzwerk die Gesamtlast kontinuierlich angepasst, um eine Reflexion von HF-Energie an dem zu erwärmenden Material zu verhindern. Um einen ITCP zu initiieren, wird die Intensität der in das Feststoffbett eingekoppelten elektromagnetischen HF-Strahlung vorzugsweise derart gewählt, dass das Feststoffbett im Bereich des Grenzbereichs unbeladener/beladener Feststoff auf eine Temperatur erwärmt wird, bei der mindestens 60 %, bevorzugter mehr als 80 % und noch bevorzugter über 90 % der adsorbierten Substanz desorbiert werden.

Unter "Feststoffbett" wird erfindungsgemäß der Raum verstanden, der von dem Feststoff einschließlich seiner Zwischenräume bei partikulärem Aufbau ausgefüllt wird. Handelt es sich bei dem Feststoff um Partikel, Körner oder Granulat, so ist das Feststoffbett vorzugsweise mit einer Schüttung des Feststoffes in der entsprechenden Form befüllt. Dabei beträgt die Füllung des Feststoffbettes mit dem Feststoff vorzugsweise einen solchen Grad, dass eine ausreichende Durchströmung gewährleistet ist. Vorzugsweise geeignete Schüttungen liegen im Bereich von 50 bis 80 % Füllung, besonders bevorzugt sind Füllungsgrade zwischen 60 und 70 %.

Erfindungsgemäß weist das Feststoffbett einen Anstrombereich und einen Abstrombereich auf, wobei sich zwischen dem Anstrom- und dem Abstrombereich ein Strömungsbett befindet. Unter dem Begriff "Strömungsbett" wird erfindungsgemäß also der Raum verstanden, der sich innerhalb der Abmessungen des Feststoffbettes befindet und zumindest teilweise von Gas durchströmt werden kann.

Zur Initiierung des ITCP wird erfindungsgemäß ein Trägergas entgegen der Richtung des Beladungsgradienten durch den Feststoff geströmt. Demzufolge erreicht das unbeladene bzw. trockene Trägergas zuerst die Reservezone, dann die Übergangszone und danach die Beladungszone. Die Reservezone bleibt dadurch unbeladen bzw. trocken und wird noch zusätzlich entladen bzw. getrocknet. In bevorzugten Ausführungsformen der Erfindung ist das Trägergas ein trockenes Inertgas, vorzugsweise trockener Stickstoff und getrocknete Luft. Unter einem "trockenen" Trägergas wird erfindungsgemäß verstanden, dass der Gehalt an Wasser im Trägergas kleiner als 20 %, vorzugsweise kleiner als 5 % relative Feuchte ist. Eine erfindungsgemäß geeignete Flussrate des Trägergases hängt stark von der Anwendung ab und kann vorzugsweise im Bereich von 0,1 bis 10000 l/min, liegen.

Die Einkopplung von HF-Strahlung und die Zuführung des Trägergasstromes während der Durchführung des erfindungsgemäßen Verfahrens erfolgen im Wesentlichen gleichzeitig. Unter "im Wesentlichen gleichzeitig" wird im Sinne der Erfindung verstanden, dass während der Regenerationsphase Gasstrom und dielektrische Erwärmung zu mehr als 80 % der Regenerationszeit, vorzugsweise zu mehr als 90 % und besonders bevorzugt zu mehr als 95 % der Regenerationszeit zeitgleich ausgeführt werden.

Entsprechend der gewünschten Prozesseigenschaften wird eine anzustrebende Geschwindigkeit der Desorptionsfront durch das Feststoffbett auf Grund wiederholter Erwärmung, Desorption und Weitertransport mittels des Trägergases durch die Wahl des Materials des Feststoffbettes sowie der adsorbierten Substanz, der Gasgeschwindigkeit durch das Schüttbett und der Intensität der elektromagnetischen Strahlung eingestellt. Diese Geschwindigkeit, d.h. die Geschwindigkeit des thermo-chromatographischen Pulses bei seiner Bewegung durch das Feststoffbett, kann in weiten Grenzen variieren. Sie beträgt in bevorzugten Anwendungen des ITCP beispielsweise von 0,1 bis 100 mm/min.

Vorzugsweise wird das erfindungsgemäße Verfahren zur Regenerierung von beladenen adsorbierenden Stoffen eingesetzt. Erfindungsgemäß handelt es sich bei der mindestens einen adsorbierten Substanz um ein organisches oder anorganisches Lösungsmittel, vorzugsweise ein organisches oder anorganisches polares Lösungsmittel und besonders bevorzugt um Wasser. Daher wird das erfindungsgemäße Verfahren besonders bevorzugt zur Trocknung von Stoffen eingesetzt, die Wasser effektiv adsorbieren, d.h. als Trocknungsmittel eingesetzt werden.

In einer möglichen weiteren Variante des Verfahrens wird kein kontrolliert beladenes Feststoff-Schüttbett, sondern ein Material mit natürlicherweise vorliegender inhomogener Wasserbeladung getrocknet. Hierzu wird im Grenzbereich mittlerer Feuchte analog zur vorher beschriebenen Applikation ein ITCP generiert. Die Durchströmung wird so eingestellt, dass sie vom trockenen in den feuchten Materialbereich gerichtet ist. Die thermische Trocknung wird dann so realisiert, dass der ITCP die feuchte Zone des Materials komplett durchläuft.

In einer weiteren bevorzugten Ausführungsform der Erfindung wird der Beladungsgradient mittels eines beladenen Gasstromes auf dem Feststoffbett etabliert, wobei der Gasgemischstrom mit mindestens einer Substanz, vorzugsweise Wasser, beladen ist. Dabei werden automatisch und gleichzeitig der Gasgemischstrom gereinigt bzw. getrocknet und der Feststoff beladen. Das erfindungsgemäße Verfahren unter Nutzung eines ITCP kann also insbesondere dort zum Einsatz kommen, wo Gasströme entfeuchtet werden sollen und dazu adsorptive Verfahren mit thermischer Regenerierung bevorzugt werden. Bevorzugte Gasströme, die erfindungsgemäß entfeuchtet werden, sind Druckluft, Erdgas, Biogas oder eine Mischung daraus. Während der anschließenden Regenerierungsphase gemäß dem erfindungsgemäßen Verfahren wird dann der Trägergasstrom gegenüber der Adsorptions-, also Trocknungsphase, umgekehrt.

In einer weiteren bevorzugten Ausführungsform der Erfindung wird ein weiterer vom Feststoff verschiedener Feststoff, der mit der Substanz beladen ist, mittels eines kontinuierlichen unbeladenen Gasstroms permanent entladen. Besonders bevorzugt ist wiederum die Entfeuchtung eines vom Trocknungsmittel verschiedenen Feststoffes durch einen trockenen Gasstrom. Anschließend wird der dann mit der Flüssigkeit beladene Gasgemischstrom durch den Feststoff im Feststoffbett geleitet, wobei der Beladungsgradient entsteht und der Gasgemischstrom getrocknet wird, der dadurch optional für eine erneute Entfeuchtung zur Verfügung steht. Unter Einsatz des erfindungsgemäßen Verfahrens kann das Feststoffbett anschließend wieder getrocknet werden. Eine analoge Verfahrensweise wird für die Entfernung anderer Substanzen als Wasser aus einem zu behandelnden Feststoff angewandt.

Mit dem erfindungsgemäßen Verfahren wird also eine Regenerierung eines beladenen Adsorbers bzw. eines Trocknungsmittels in sehr effizienter Weise realisiert. Insbesondere wird nur der beladene Teil des Feststoffbettes erwärmt, die unnötige Erwärmung des unbeladenen Bettes entfällt. Darüber hinaus erfolgt automatisch eine Etablierung des ITCP im Grenzbereich (beladener/unbeladener Feststoff), ohne dass die Lage des Grenzbereiches für den Start der Regenerierungsphase identifiziert werden muss. Der Begriff Grenzbereich kann hierbei eine gewisse endliche Ausdehnung in drei Dimensionen beinhalten. Im Extremfall sehr steiler Beladungsgradienten handelt es sich praktisch um eine zweidimensionale Grenzfläche.

Das erfindungsgemäße Verfahren bietet somit das Potenzial zu einer einfachen, selbstregulierenden Betriebsweise, die im Rahmen von automatisierten Prozessen anwendbar ist. Dadurch, dass die thermische Regenerierung und die Temperaturerhöhung auf den notwendigen Bereich beschränkt werden, ist eine höhere Energieeffizienz und damit Wirtschaftlichkeit gegenüber anderen Verfahren nach dem Stand der Technik gegeben. Außerdem wird die für die Regenerierung notwendige Zeit erheblich verkürzt. Weiterhin vorteilhaft ist die Tatsache, dass die Reservezone während der gesamten Regenerierung nicht mit beladenem bzw. feuchtem Gas durchströmt wird. Das trockene Trägergas hingegen führt zu keiner Erhöhung der Feuchte in dieser Zone, sondern im Gegenteil zu einer weiteren Trocknung. Da diese Zone bei einer erneuten Beladung letztlich die Endfeuchte und damit die Reinigungseffizienz bestimmt, besitzt das erfindungsgemäße Verfahren auch in dieser Hinsicht Vorteile gegenüber dem Stand der Technik. Für andere adsorbierte Stoffe als Wasser trifft diese Argumentation in analoger Weise zu.

Die Erfindung betrifft weiterhin eine Vorrichtung zur Durchführung des erfindungsgemäßen Verfahrens. Die Vorrichtung weist ein Feststoffbett, das den Feststoff beinhaltet, mit einer ersten Öffnung und einer zweiten Öffnung auf, die jeweils geeignet sind zum Anströmen und/oder Abströmen eines Gases. Dabei befinden sich die erste Öffnung im Anstrombereich und die zweite Öffnung im Abstrombereich des Feststoffes. Weiterhin weist die erfindungsgemäße Vorrichtung mindestens ein Mittel zur Erzeugung einer Gasströmung entlang der Längsrichtung des Feststoffbettes auf, wobei die Gasströmung von der ersten Öffnung zur zweiten Öffnung oder umgekehrt erfolgen kann. Des Weiteren weist die erfindungsgemäße Vorrichtung ein Mittel zur dielektrischen Erwärmung des Feststoffbettes auf, wobei das Mittel zur dielektrischen Erwärmung des Feststoffbettes mindestens eine zur dielektrischen Erwärmung geeignete Elektrode aufweist. Erfindungsgemäß ist das Mittel zur dielektrischen Erwärmung (Erwärmungsmittel) ausgebildet, hochfrequente elektromagnetische Strahlung mit einer Frequenz im Bereich von 100 kHz bis 500 MHz abzustrahlen. Die Frequenz bezieht sich dabei auf die maximale Intensität der emittierten Strahlung. Besonders bevorzugte HF-Strahlung liegt im Frequenzbereich von 500 kHz bis 100 MHz, noch bevorzugter im Bereich von 1 MHz bis 50 MHz und besonders bevorzugt im Bereich von 1 MHz bis 30 MHz. Vorzugsweise sind im Anstrombereich des Feststoffbettes ein erster und/oder im Abstrombereich ein zweiter Gassensor, besonders bevorzugt bei Trocknungsprozessen Feuchtesensor, positioniert. Vorzugsweise weist die erfindungsgemäße Vorrichtung ein Mittel zur Steuerung des Mittels zur dielektrischen Erwärmung des Feststoffbettes und ein Mittel zur Steuerung des Mittels zur Erzeugung der Gasströmung auf, wobei diese Mittel mit dem Mittel zur Erzeugung der Gasströmung, dem Mittel zur Steuerung des Mittels zur dielektrischen Erwärmung des Feststoffbettes und dem ersten und zweiten Feuchtesensor verbunden sind.

Die erste und zweite Öffnung sind beispielsweise als Zweiwegeventile ausgelegt, mittels derer eine entgegengesetzte Gasströmung und eine Strömungsunterbrechung bewirkt werden können. Die genauen Positionen im An-und Abstrombereich des Festbettes sind beliebig und werden durch die technischen Randbedingungen des Prozesses bestimmt. Aus verfahrenstechnischen Gründen ist es allerdings bevorzugt, dass erste und zweite Öffnung einander gegenüber liegen und an den Rändern des Feststoffes bzw. des Feststoffbettes positioniert sind. Besonders bevorzugt weisen erste und/oder zweite Öffnung Durchflussmesser auf, wodurch die Kontrolle und Regulation der durch die Öffnung fließenden Gasströme erleichtert wird.

Das mindestens eine Mittel zur Erzeugung der Gasströmung zwischen den Öffnungen ist vorzugsweise derart ausgestaltet, dass die Strömungsrichtung zwischen den zwei Öffnungen umgekehrt werden kann. Alternativ werden zwei Mittel zur Erzeugung der Strömung verwendet, die jeweils eine Strömung in eine Richtung erzeugen. Besonders bevorzugt ist das mindestens eine Mittel zur Erzeugung der Gasströmung zwischen den Öffnungen derart ausgestaltet, dass der Richtungswechsel der Gasströmung automatisch erfolgen kann.

Erfindungsgemäß weist das Mittel zur dielektrischen Erwärmung mindestens eine Elektrode auf. Die dielektrische Erwärmung des Feststoffes kann mit unterschiedlichen Elektrodengeometrien oder mit Axialdipolen (Antennen) realisiert werden. Bevorzugte Elektroden sind Stab-, Platten- oder Ringelektroden. Stab- oder Plattenelektroden werden vorzugsweise parallel zur Längsachse des Feststoffbettes positioniert, Ringelektroden können auch als Ring um das Feststoffbett vorliegen. Eine andere bevorzugte Variante ist der Einsatz von Plattenelektroden, die senkrecht zur Strömungsrichtung und damit zur Zentralachse des Feststoffbettes angeordnet sind. Bei Stab- oder Plattenelektroden werden vorzugsweise zwei oder mehr Elektroden eingesetzt. Vorzugsweise werden die Elektroden paarweise eingesetzt. Erfindungsgemäß werden die Elektroden mit einer hochfrequenten Wechselspannung gespeist, wobei vorzugsweise eine der Elektroden als kalte Elektrode und eine Elektrode als heiße Elektrode (Arbeitselektrode) betrieben wird. Als kalte Elektrode wird dabei die geerdete Elektrode definiert. In einer weiteren Ausgestaltung der Erfindung sind mehr als zwei Elektroden vorgesehen. Vorzugsweise sind dann eine heiße und mehrere kalte Elektroden vorgesehen.

Die Elektroden erstrecken sich vorzugsweise entlang der Beladungszone und der Überganszone. Die Reservezone muss theoretisch nicht im Einflussbereich der Elektroden liegen. Um die Beladungskapazität des Feststoffbettes möglichst flexibel zu halten, reicht der Einflussbereich der Elektroden vorzugsweise allerdings noch in den Reservebereich des Feststoffbettes hinein bzw. umfasst diesen vollständig. Vorzugsweise sind die Elektroden bei Mehrelektrodenanordnungen derart ausgelegt, dass einzelne Elektrodenbereiche angesteuert werden können. Alternativ können die Elektroden zuerst auch nur im Übergangsbereich des Feststoffbettes angeordnet sein und dann entlang des Feststoffbettes in Richtung der ersten Öffnung bewegt werden.

Die mindestens eine zur dielektrischen Erwärmung geeignete Elektrode ist mit einem HF-Generator verbunden. In einer besonders bevorzugten Ausgestaltung der Erfindung ist zwischen die mindestens eine Elektrode und den HF-Generator ein elektronisches Anpassnetzwerk geschaltet, um die sich verändernde Impedanz des Feststoffbettes (der Last) an den Innenwiderstand des Generators anzupassen und damit eine optimale Energieeinkopplung in das System zu ermöglichen. Geeignete Mittel zur Steuerung des HF-Generators und des elektronischen Anpassnetzwerkes sind Personalcomputer oder jedwede anders geartete elektronische Steuerung.

Vorzugsweise ist ein erster Feuchtesensor im Anstrombereich des Feststoffes möglichst nahe am Rand des Feststoffes bzw. des Feststoffbettes positioniert. Ein zweiter Feuchtesensor liegt vorzugsweise weiter im Inneren des Feststoffes bzw. des Feststoffbettes. Besonders bevorzugt wird der zweite Feuchtesensor an der Stelle im Feststoffbett positioniert, an der der Reservebereich bei maximaler Ausnutzung der Kapazität des Feststoffbettes üblicherweise beginnt. Feuchtesensoren sind jedoch für eine Realisierung des Verfahrens nicht essentiell.

In einer besonders bevorzugten Ausgestaltung der Erfindung weist das Mittel zur Steuerung des Mittels zur Erzeugung der Gasströmung eine Steuerungsfunktion auf, die derart ausgelegt ist, dass das Mittel zur Erzeugung der Gasströmung eine Gasströmung von der ersten Öffnung zur zweiten Öffnung erzeugt, bis der zweite Feuchtesensor einen Wert oberhalb eines vorher festgelegten ersten Schwellenwertes anzeigt und nach Überschreiten des ersten Schwellenwertes das Mittel zur Erzeugung der Gasströmung eine Gasströmung von der zweiten Öffnung zur ersten Öffnung erzeugt, bis der erste Feuchtesensor einen Wert unterhalb eines vorher festgelegten zweiten Schwellenwertes anzeigt und die derart ausgelegt ist, dass das Mittel zur dielektrischen Erwärmung während der Dauer der Gasströmung von der zweiten Öffnung zur ersten Öffnung aktiv ist. Das bedeutet, dass die Mittel zur Steuerung der Gasströmung und zur dielektrischen Erwärmung synchronisiert sind. Dadurch wird es möglich, dass die erfindungsgemäße Vorrichtung die thermische Regenerierung automatisch für den beladenen Bereich startet, sobald dies nötig wird, wobei zur Triggerung vorher festgelegte Grenzwerte an den Feuchtesensoren verwendet werden. Ein geeigneter Schwellenwert am zweiten Feuchtesensor, der überschritten werden muss, damit der Regenerierungsvorgang startet, liegt vorzugsweise im Bereich von 1 bis 10 % der maximalen Beladung des Feststoffes, insbesondere bevorzugt im Bereich von 5 bis 10 %. Ein geeigneter Schwellenwert am ersten Feuchtesensor der unterschritten werden muss, damit der Regenerierungsvorgang als abgeschlossen gilt und die Beladung erneut gestartet wird, liegt vorzugsweise im Bereich von 0,1 bis 5 % der maximalen Beladung des Feststoffes, insbesondere bevorzugt im Bereich von 0,1 bis 1 %.

Vorteilhafterweise ist die erfindungsgemäße Vorrichtung auch geeignet, technisch relevante Volumina von Schüttbetten im Liter- und Kubikmetermaßstab zu regenerieren. Vorzugsweise beträgt das Volumen des Feststoffbetts in einer erfindungsgemäßen Vorrichtung 0,001 bis 100 Kubikmeter, vorzugsweise 0,01 bis 10 Kubikmeter.

Es versteht sich, dass diese Erfindung nicht auf die spezifischen Vorrichtungen, Zusammensetzungen und Bedingungen beschränkt ist, wie sie hier beschrieben sind, da diese variieren können. Es versteht sich des Weiteren, dass die vorliegend verwendete Terminologie ausschließlich dem Zweck der Beschreibung besonderer Ausführungsformen dient und nicht den Schutzumfang der Erfindung einschränken soll. Wie vorliegend in der Spezifikation einschließlich der anhängigen Ansprüche verwendet, schließen Wortformen im Singular, wie z. B. "ein", "eine", "einer", "der", "die" oder "das" die Entsprechung im Plural ein, sofern der Kontext nicht eindeutig etwas anderes vorgibt.

Im Folgenden soll die Erfindung an Hand von Ausführungsbeispielen näher erläutert werden. Es zeigen
Fig. 1 die Abhängigkeit der Energieeinkopplung bei dielektrischer Erwärmung mit Hochfrequenz-Energie (13,56 MHz) von der Feuchte für den Zeolith NaY,
Fig. 2 eine schematische Darstellung der erfindungsgemäßen Vorrichtung im Adsorptions- bzw. Trocknungsmodus (Fig. 2A) und im Regenerierungsmodus (Fig. 2B),
Fig. 3 zeitliche Verläufe der Temperaturen an unterschiedlichen Messpositionen im Feststoffbett 11 (Sensoren 1 bis 4; Sensoren 1 und 2 in der Reservezone 8, Sensoren 3 und 4 in der Beladungszone 7) und der Feuchte im Trägergas 24 nach Durchströmen des Feststoffbettes 11 während einer Trocknung mittels ITCP zur thermischen Regenerierung (HF-Leistungseintrag ab 263 min 102 W, Frequenz 13,56 MHz),
Fig. 4 die Oberflächentemperatur während der Trocknung des Feststoffbettes 11 mittels eines ITCP im Labormaßstab (Aufnahmen mit einer Infrarotkamera nach etwa 0 min, 10 min, 25 min und 39 min),
Fig. 5 das Fortschreiten der Beladungsfront bei der Wasserbeladung eines Feststoffbettes 11 gemäß Beispiel 1, detektiert anhand der Oberflächentemperatur mittels Infrarotkamera (zu Beginn der Beladung und alle 2 h bis zum Beladungsende nach 10 h) und
Fig. 6 die Oberflächentemperatur während der Trocknung eines Feststoffbettes 11 gemäß Beispiel 2 mittels eines ITCP (Aufnahmen mit der Infrarotkamera alle 20 min).

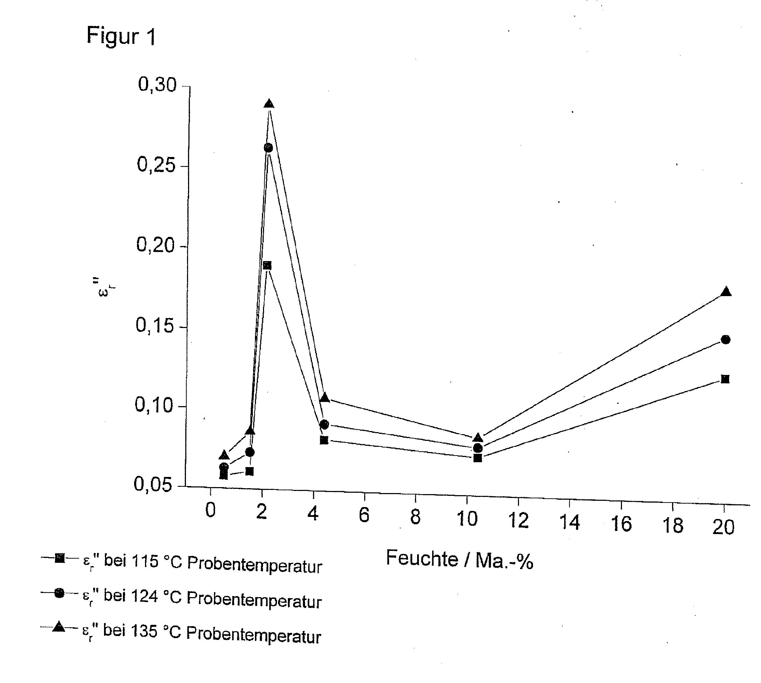

Figur 1 zeigt die Energieeinkopplung in Abhängigkeit von der Beladung mit Wasser für einen Zeolith vom Typ NaY. Bei ca. 2 %, also etwa bei einem Zehntel der Wasseraufnahmekapazität des Zeoliths, ergibt sich ein ausgeprägtes Optimum für die Energieeinkopplung. Bei verschiedenen Probentemperaturen ist das Maximum unterschiedlich stark ausgeprägt.

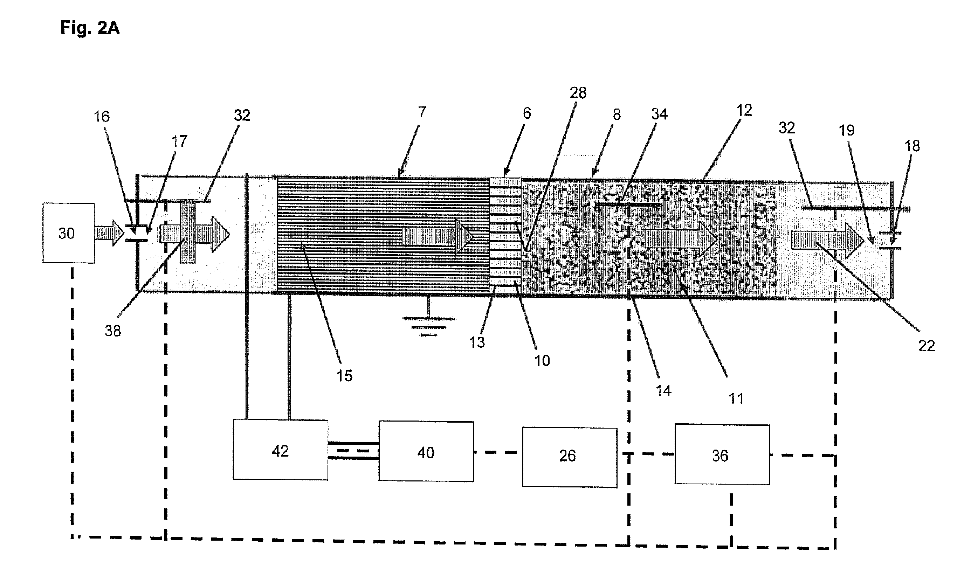

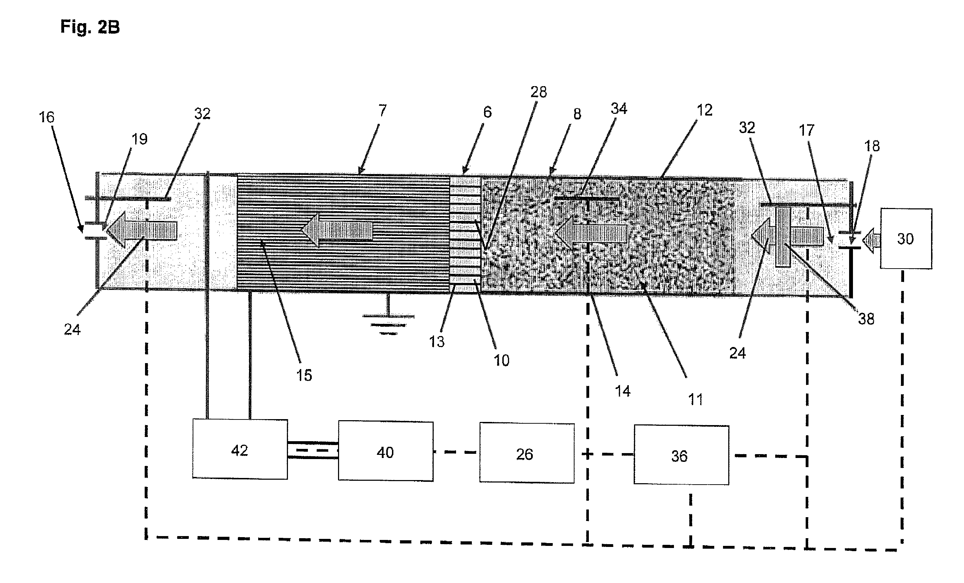

Figur 2 zeigt eine schematische Darstellung der erfindungsgemäßen Vorrichtung einmal im Adsorptions- bzw. Gastrocknungsmodus (Figur 2A) und einmal im Regenerierungsmodus (Figur 2B). Bezugszeichen werden analog verwendet. Ein Feststoffbett 11 ist mit einem Feststoff 10, beispielsweise einem NaY-Zeolith, gefüllt, der mit einer adsorbierten Substanz 13, hier Wasser, beladen ist, wobei die Kapazität des Trocknungsmittels hier nicht ausgeschöpft wurde. Demnach unterteilt sich das Feststoffbett 11 in drei verschiedene Bereiche, und zwar einen unbeladenen Bereich 8, die Reservezone, einen Bereich mit maximaler Beladung 7, die Beladungszone, und dazwischen liegend einen Bereich 6, die Übergangszone, mit abfallender Beladung. In der Übergangszone 6 liegt somit ein abfallender Konzentrationsgradient in Richtung auf die Reservezone 8 vor. In der Übergangszone 6 befindet sich ein Grenzbereich 28 zum unbeladenen Bereich des Feststoffes 10, der gemäß Figur 1 für den Zeolith NaY vorteilhafterweise durch eine Wasserbeladung von ca. 2 Ma.-% charakterisiert ist.

Für die verfahrensgemäße thermische Regenerierung des Feststoffs 10 mittels dielektrischer Erwärmung mit HF-Energie befinden sich zumindest die Übergangszone 6 und die Beladungszone 7 im Wirkungsbereich eines Elektrodensystems, das sich im vorliegenden Fall aus zwei Elektroden 12, 14 zusammensetzt. Die zwei Elektroden 12, 14 sind über ein elektronisches Anpassnetzwerk 42 (Matchbox) mit einer HF-Spannungsquelle (HF-Generator, 40) verbunden. Die Elektroden 12, 14 sind derart ausgelegt, dass sie geeignet sind, HF-Energie in das Feststoffbett 11 zu übertragen. Zur Steuerung der eingekoppelten Energie und insbesondere auch zur Anpassung der Matchbox-Parameter an die Impedanz des Feststoffes 10 ist der HF-Generator 40 vorzugsweise zusätzlich mit einem Mittel zur Steuerung 26 verbunden. Vorzugsweise handelt es sich dabei um einen Personalcomputer oder eine anders geartete elektronische Steuerung.

Der sich im Feststoffbett 11 befindende Feststoff 10 ist in der Lage, aus dem Strom eines Gasgemisches 22 Wasser 13 durch Adsorption mit hoher Effizienz zu entfernen und diesen Gasstrom 22 somit zu trocknen. Zur Erhöhung der Flexibilität trifft dies auch für den Feststoff in der Reservezone 8 zu. Die Regenerierung des Feststoffes 10 wird durch die Einstrahlung von HF-Energie und die Zuschaltung eines Trägergasstroms 24 gestartet. Die entsprechende schematische Darstellung erfolgt in Figur 2B. Der Trägergasstrom 24, meistens trockener Stickstoff, trockene Luft oder ein anderes trockenes Gas, wird in entgegengesetzter Richtung zum Gasgemischstrom 22 und zum abfallenden Gradienten der Beladungskonzentration in der Übergangszone 6 geführt. Dies bedeutet, dass ein Anstrombereich 17, der am Beginn der Beladungszone 7 liegt und von dem Gasgemischstrom 22 bei der Beladung zuerst passiert wird, den Bereich bei der Regenerierung darstellt, in dem der Trägergasstrom 24 den Feststoff 10 verlässt. Umgekehrt ist ein Abstrombereich 19, der am Ende der Reservezone 8 liegt und in dem der Gasgemischstrom 22 den Feststoff 10 im Beladungsmodus verlässt, der Bereich, in dem der Trägergasstrom 24 in den Feststoff 10 bei der Regenerierung einströmt. Zwischen Anstrombereich 17 und Abstrombereich 19 befindet sich entlang der Längsachse des Feststoffbettes 11 ein Strömungsbett 15, durch das die beiden Gasströme 22, 24 während der beiden Betriebsmodi in entgegengesetzter Richtung strömen. Ist das Feststoffbett 11 mit einem Schüttbett aus Feststoff 10 gefüllt, weist das Feststoffbett 11 an beiden Enden vorzugsweise Verschlüsse, wie beispielsweise Deckel oder Gitter auf, die der Fixierung des Schüttbettmaterials dienen. Zum Einströmen der Gase sind an beiden Seiten des Feststoffbettes 11 Öffnungen vorgesehen, wobei eine erste Öffnung 16 vor dem Anstrombereich 17 des Gasgemischstroms 22 und eine zweite Öffnung 18 hinter dem Abstrombereich 19 des Gasgemischstroms 22 liegt. Die Öffnungen können prozessabhängig in ihrem Querschnitt den gesamten Festbettquerschnitt erreichen. Zur Erzeugung des Gasgemischstromes 22 und des Trägergasstromes 24 ist mindestens ein Mittel 30 zur Erzeugung eines Gasstromes vorgesehen. Entweder werden Hin- und Rückstrom durch das eine Mittel 30 erzeugt oder die beiden Ströme werden durch zwei verschiedene Mittel 30 zur Erzeugung von Gasströmen produziert. Der Einstrom des Gasgemischstroms 22 und/oder des Trägergasstroms 24 kann vorzugsweise durch Durchflussmesser 38 kontrolliert werden. Alternativ kann ein Durchflussregler 38 eingesetzt werden.

Unter dem Einfluss der Einstrahlung von HF-Energie und unter der Wirkung des Trägergasstromes 24 bildet sich im Grenzbereich 28 dann ein ITCP aus, der den Feststoff 10 im Feststoffbett 11 in Richtung der Beladungszone 7 durchläuft. Durch die Temperaturerhöhung im ITCP wird das Wasser desorbiert, mit dem Trägergasstrom 24 mitgeführt und schließlich aus dem Feststoffbett 11 ausgetragen. Nach dem vollständigen Durchlaufen der Beladungszone 7, d.h. nach Erreichen des Beginns des Festbettes im Anstrombereich 17, ist der Adsorber 10 getrocknet und somit regeneriert. Er steht danach zur erneuten Wasseradsorption zur Verfügung. Der Prozess läuft in analoger Weise ab, wenn anstelle von Wasser eine andere Substanz im Festbett adsorbiert ist. Im Folgenden soll die Erläuterung jedoch exemplarisch für die Wasseradsorption (Trocknung von Gasströmen) und die nachfolgende Regenerierung des Trocknungsmittels erfolgen.

Die zyklische Widerholung der einzelnen Schritte ermöglicht ein quasikontinuierliches Trocknungsregime. Zur einfacheren Steuerung eines automatischen Trocknungsregimes befinden sich optional in den Gasströmen 22, 24 im An- 17 und/oder Abstrombereich 19 erste Feuchtesensoren 32 bzw. Gassensoren im allgemeinen Fall. Zur Optimierung des Zeitregimes bei der Beladung und Regenerierung kann zudem ein zweiter Feuchte- bzw. Gassensor 34 in der Reservezone 8 vorgesehen werden. Die Mittel zur Steuerung der dielektrischen Erwärmung und der Gasflüsse 26. 36 und 30 weisen optional eine Rückkopplung zu den ersten und zweiten Feuchtesensoren 32, 34 auf.

### Beispiel 1

Das erfindungsgemäße Verfahren wurde in einem U-förmigen Glasreaktor (mit dem Feststoffbett 11) durchgeführt, welcher mit einer Zeolithschüttung (NaY, Gesamtmasse etwa 5,5 g, Partikelgröße ca. 2 mm; Feststoff 10) als Adsorber versehen war. Die beiden Enden des Feststoffbettes 11 weisen einen Anstrombereich 17 und einen Abstrombereich 19 auf. Das Feststoffbett 11 selbst stellt für ein einströmendes Gas ein Strömungsbett 15 dar. Der Zeolith vom Typ NaY ist als effektives Trocknungsmittel für Wasser als zu adsorbierende Substanz 13 bekannt. Die Beladungskapazität bei Umgebungstemperatur und ca. 50 % relativer Feuchte beträgt ungefähr 20 Ma.-%. Der U-förmige Glasreaktor mit dem Feststoffbett 11 befand sich zwischen zwei parallelen Plattenelektroden 12, 14 und bildete somit das Dielektrikum eines Kondensators. Die Elektrode 12 wurde über ein elektronisches Anpassnetzwerk 42 mittels Koaxialleitungen an einen wassergekühlten HF-Generator 40 (Frequenz 13,56 MHz, Maximalleistung 1 kW) angeschlossen. Letztere sind mit einem Leitsystem-PC 36 gekoppelt. Die andere Elektrode 14 ist geerdet, d.h. mit den Gehäusen von Generator 40 und Matchbox 42 verbunden.

Die Beladung des trockenen Adsorberbettes 10 (vorher ausgeheizt bei 300°C für 5 h) erfolgte über einen Gasgemischstrom 22 (Volumenstrom 140 ml/min), der bei 15°C mit Wasser gesättigt wurde. Die Befeuchtung erfolgte über einen Zeitraum von 255 min, wobei noch kein Durchbruch des Wassers 13 aus dem Feststoffbett 11 zu beobachten war. Das Bett wurde zur Verfahrensdemonstration nur zu etwa 35 % der Aufnahmekapazität mit Wasser 13 beladen. Der Beladungsbereich 7 erstreckte sich damit nur über zwei Temperatursensoren. Bei der praktischen Anwendung des Verfahrens sind allerdings höhere Beladungen (z.B. bis zu 80 %) möglich, bevor eine Regenerierung erfolgen muss.

Zur Erfassung der Temperatur im Schüttbettvolumen waren am Anfang, bei etwa einem Drittel und zwei Dritteln sowie am Ende des Schüttbettes faseroptische Sensoren angeordnet, die die Temperaturmessung auch unter dem Einfluss eines elektromagnetischen Feldes ermöglichen. Zusätzlich wurde die Oberflächentemperatur der Zeolithschüttung mittels einer Infrarotkamera, die mit einem Durchglasfilter ausgerüstet war, beobachtet. Anhand der leichten Temperaturerhöhung während der Adsorption (auf Grund der Adsorptionsenthalpie von Wasser am Zeolith) konnte die Beladungsfront im Schüttbett 10 detektiert werden (siehe Beispiel 2).

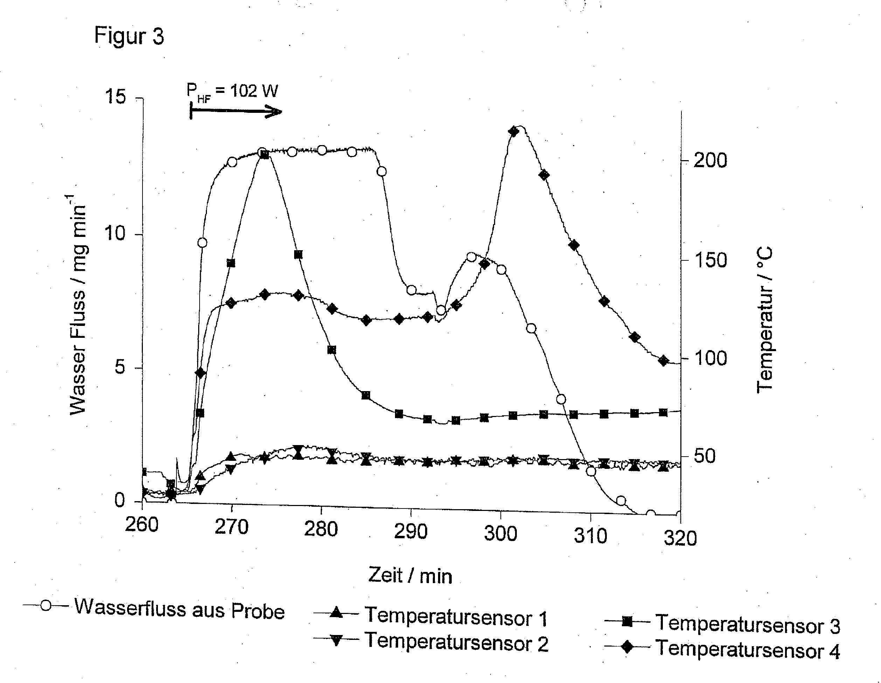

Nach der partiellen Beladung des Trocknungsmittels 10 erfolgte die Regenerierung mit Hilfe des erfindungsgemäßen Verfahrens. Hierzu wurde zuerst die Richtung des Gasflusses im Vergleich zur Adsorption umgekehrt, wodurch der Trägergasstrom 24 gemäß Figur 2B etabliert wurde. Die Gassensoren waren nun in der Reihenfolge Sensor 1 bis 4 in Flussrichtung des Trägergasstroms 24 angeordnet. Die Sensoren 1 und 2 befanden sich somit in der Reservezone 8, Sensor 3 befand sich im Beladungsbereich in der Nähe der Übergangszone 6 und Sensor 4 war in der Beladungszone 7 positioniert. Die Temperaturverläufe an den einzelnen Sensoren und die Feuchte im Trägergasstrom 24 während der Regenerierungsphase sind in Figur 3 gezeigt.

Zum Start der Regenerierung nach ca. 263 min wurde die HF-Leistung eingeschaltet (Leistungseintrag 102 W, Frequenz 13,56 MHz). Dadurch etablierte sich in der Übergangszone 6 in dem Grenzbereich 28 ein ITCP, der durch eine starke Temperaturerhöhung in diesem Bereich gekennzeichnet war (Sensor 3). Dieser Puls bewegte sich anschließend in Durchströmungsrichtung des Trägergases 24 durch das beladene Feststoffbett 11. Der unbeladene Bereich 8 des Schüttbettes blieb hingegen praktisch kalt (Sensoren 1 und 2). Im maximal beladenen Bereich 7 war eine schwache kontinuierliche Erwärmung zu beobachten, die jedoch von dem wesentlich stärkeren ITCP überlagert wurde (Temperaturverlauf am Sensor 4). Während der gesamten Laufzeit des ITCP war ein kontinuierlicher Wasseraustrag aus dem Reaktor zu beobachten. Erst mit dem Erreichen des Schüttbettendes (Anstrombereich 17) durch den ITCP nahm die Feuchte des Luftstromes 24 kontinuierlich ab, was auf die Trocknung des gesamten Bettes 11 hinweist.

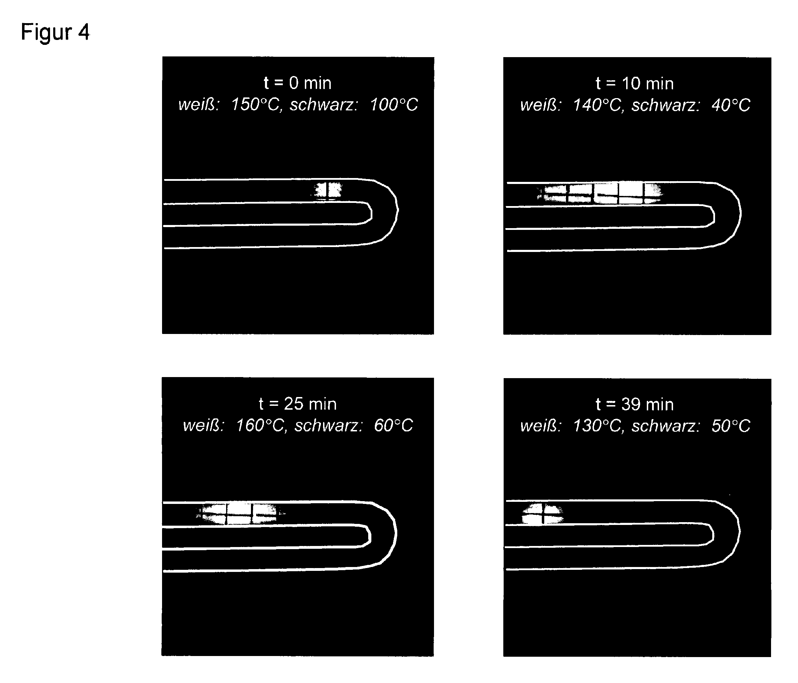

Die Bewegung des ITCP durch das beladene Schüttbett 11 konnte auch mit Hilfe der Infrarotkamera verfolgt werden. In Figur 4 sind die Temperaturverteilungen an der Oberfläche der Schüttung für 4 verschiedene Zeitpunkte dargestellt. Aus den Aufnahmen wird auch das Grundprinzip des Verfahrens ersichtlich, dass für die Regenerierung nur der mit Wasser 13 beladene Bereich 6, 7 des Schüttbettes 11 signifikant erwärmt wird. Der Grad der erreichten Trocknung wurde sowohl durch Wägung als auch durch die Analyse des den Reaktor verlassenden Trägergasstromes 24 bestimmt. Es ergaben sich gut übereinstimmende Restfeuchten für das Gesamtbett 11 von 0,6 Ma.-% bzw. 0,4 Ma.-%. Daraus lässt sich ein Restwassergehalt von etwa 1 Ma.-% für den ursprünglich beladenen Teil 6, 7 des Feststoffbettes 11 abschätzen.

### Beispiel 2

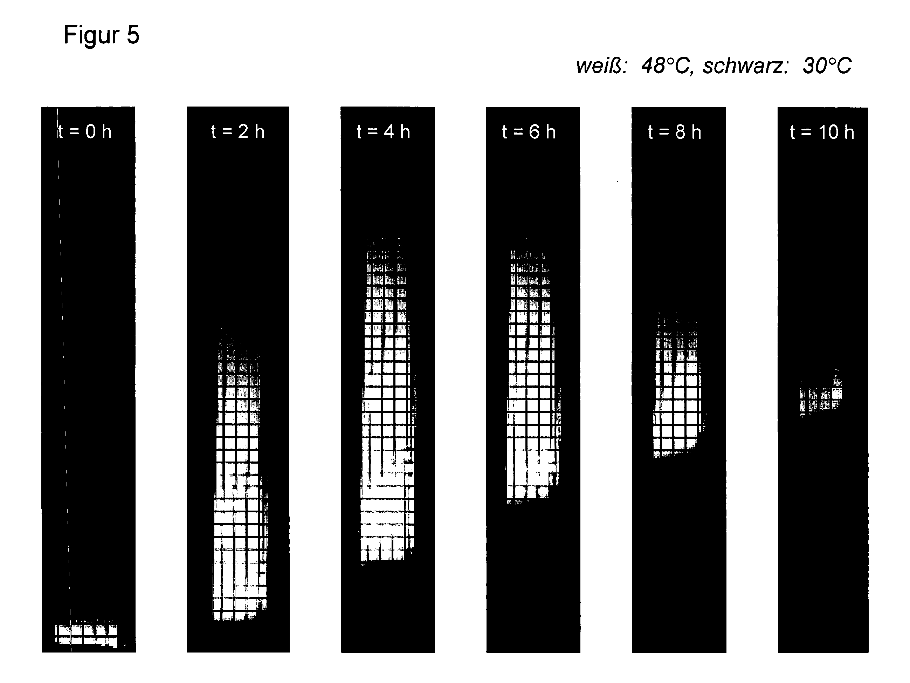

Ein zu Beispiel 1 analoges Experiment wurde in einem vergrößerten Maßstab durchgeführt. Ein zylindrischer Glasreaktor mit dem Feststoffbett 11 (Länge 60 cm, Innendurchmesser 4,7 cm) wurde mit dem Zeolith NaY als Feststoff 10 gefüllt (Füllhöhe 50 cm, Gesamtmasse ca. 0,95 kg, Partikelgröße ca. 2 mm). Auf das Schüttbett 11 wurden 100 ml Wasser über einen Stickstoffstrom 22 (Flussrate 1000 ml/min) dosiert. Das Fortschreiten der Beladungsfront (Lineargeschwindigkeit ca. 2,5 cm/h) konnte anhand der durch die Adsorptionsenthalpie hervorgerufenen Temperaturerhöhung wiederum mittels einer Infrarotkamera mit Durchglasfilter verfolgt werden. Der Beladungsverlauf ist in Figur 5 veranschaulicht. Der Wassergehalt 13 in der beladenen Zone 7 wurde auf etwa 17 Ma.-% abgeschätzt.

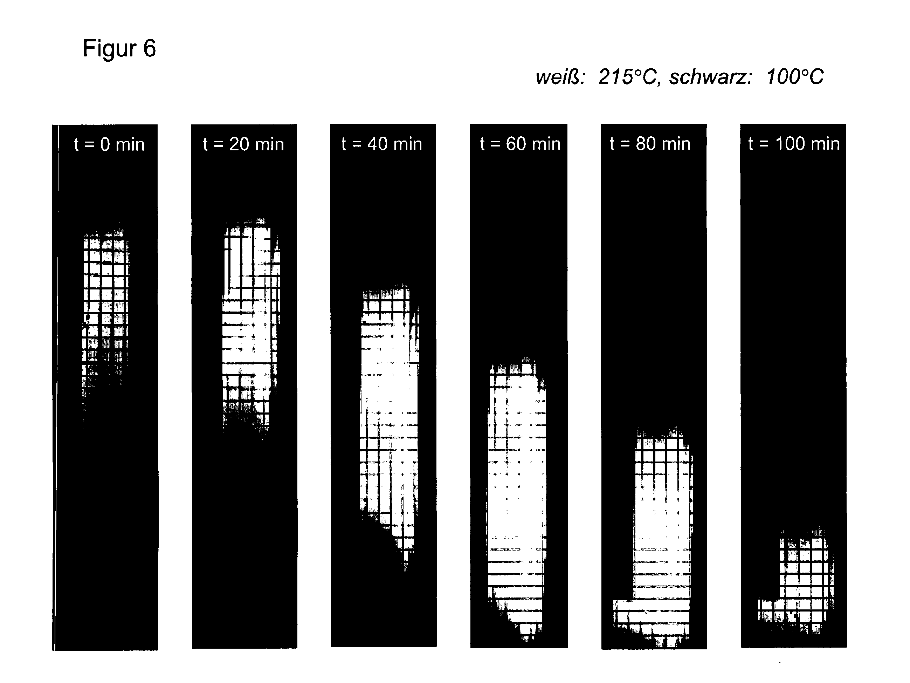

Im Anschluss an die Beladung wurde die thermische Regenerierung analog zur Trocknung im Beispiel 1 mittels eines ITCP durchgeführt. Das Fortschreiten der Temperaturfront wurde wiederum durch die Infrarotaufnahmen zu unterschiedlichen Zeitpunkten veranschaulicht (siehe Figur 6). Der zeitliche und örtliche Temperaturverlauf konnte durch im Inneren der Schüttung angeordnete faseroptische Temperatursensoren bestätigt werden. Auch im größeren Maßstab konnte die Effizienz des ITCP nachgewiesen werden. Es wurden ca. 95 % des adsorbierten Wassers 13 ausgetragen. Die mittlere erreichte Endfeuchte betrug 0,9 Ma.-% und war somit mit dem im Beispiel 1 erreichen Ergebnis vergleichbar.

Bei der Bewertung der Ergebnisse ist zu berücksichtigen, dass die Wasserbeladung aus Gründen der Quantifizierbarkeit auf einen bei 300°C getrockneten Zeolith erfolgte. Der ITCP mit einer Spitzentemperatur von ca. 220°C führte nicht zu einer kompletten Austrocknung, sondern zu einem Restwassergehalt von weniger als 1 %. Dies ist jedoch für die technische Anwendung des Verfahrens akzeptabel, da der Gasgemischstrom im folgenden Adsorptionsmodus in jedem Fall ausreichend durch Wasseradsorption getrocknet werden kann. Werden die Spitzentemperaturen im ITCP durch eine höhere spezifische Leistungsdichte erhöht, kann eine weitere Steigerung der Trocknungsleistung erreicht werden. Über die Steuerung der Spitzentemperatur kann somit die Trockenleistung auf die einzelnen Anwendungen angepasst werden. Das erfindungsgemäße Verfahren bietet somit durch die direkte HF-Erwärmung in Bezug auf die zu erreichende Trocknungsleistung eine hohe Flexibilität.

### Bezugszeichen liste

- 6: Bereich mit abfallender Beladung (Übergangszone)
- 7: Bereich mit maximaler Beladung (Beladungszone)
- 8: unbeladener Bereich (Reservezone)
- 10: Feststoff
- 11: Feststoffbett
- 12, 14: Elektrode
- 13: adsorbierte Substanz
- 15: Strömungsbett
- 16: erste Öffnung
- 17: Anstrombereich
- 18: zweite Öffnung
- 19: Abstrombereich
- 22: Gasgemischstrom
- 24: Trägergas
- 26, 36: Mittel zur Steuerung
- 28: Grenzbereich
- 30: Mittel zur Erzeugung eines Gasstromes
- 32: erster Gassensor, z.B. Feuchtesensor
- 34: zweiter Gassensor, z.B. Feuchtesensor
- 38: Durchflussmesser/-regler
- 40: HF-Generator
- 42: Anpassnetzwerk (Matchbox)

## Patentansprüche

1. Verfahren zur Entfernung einer adsorbierten Substanz von einem Feststoff (10) in einem Feststoffbett (11), welches mindestens einen Anstrombereich (17) zum Einströmen eines Trägergases (24) und mindestens einen Abstrombereich (19) zum Ausströmen des Trägergases (24) aufweist, wobei sich zwischen dem Anstrombereich (17) und dem Abstrombereich (19) ein Strömungsbett (15) befindet und in Längsrichtung des Strömungsbettes (15) in dem Feststoff (10) ein Beladungsgradient aus mindestens einer adsorbierten Substanz (13) ausgebildet ist, wobei der Feststoff (10) nach der Beladung mindestens einen Bereich maximaler Beladung (7), einen Bereich mit abfallender Beladung (6) und einen unbeladenen Bereich (8) sowie mindestens einen Grenzbereich (28) zwischen dem beladenen Feststoff (10) und dem unbeladenen Feststoff (10) aufweist, **dadurch gekennzeichnet, dass**
- das Feststoffbett (11) mit einem Trägergas (24) durchströmt wird, wobei das Trägergas (24) in entgegengesetzter Richtung zum abfallenden Beladungsgradienten strömt und
- gleichzeitig das Feststoffbett (11) mit hochfrequenter elektromagnetischer Strahlung mit einer Frequenz im Bereich von 100 kHz bis 500 MHz bestrahlt wird.

2. Verfahren nach Anspruch 1, **dadurch gekennzeichnet, dass** die mindestens eine adsorbierte Substanz (13) eine Flüssigkeit ist und/oder dass der Feststoff (10) des Feststoffbettes (11) ein Trocknungsmittel für Gase ist.

3. Verfahren nach einem der vorhergehenden Ansprüche, **dadurch gekennzeichnet, dass** ein Feststoff (10) verwendet wird, dessen Energieeinkopplung durch HF-Strahlung bei nicht maximaler Beladung mit der mindestens einen adsorbierten Substanz (13) ein Maximum aufweist, und/oder das Feststoffbett (11) mit hochfrequenter elektromagnetischer Strahlung mit einer Frequenz im Bereich von 500 kHz bis 100 MHz bestrahlt wird.

4. Verfahren nach einem der vorhergehenden Ansprüche, **dadurch gekennzeichnet, dass** ein Feststoff (10) verwendet wird, dessen Energieeinkopplung durch HF-Strahlung bei nicht maximaler Beladung mit der mindestens einen adsorbierten Substanz (13) mindestens doppelt so gut, vorzugsweise mindestens dreimal so gut wie bei maximaler Beladung ist.

5. Verfahren einem der vorhergehenden Ansprüche, **dadurch gekennzeichnet, dass** sich der Beladungsgradient über weniger als 40 %, vorzugsweise weniger als 30 %, weiter bevorzugt weniger als 20 % der räumlichen Ausdehnung des Feststoffes (10) erstreckt, und/oder dass die maximale Beladung des Feststoffes (10) mit der mindestens einen adsorbierten Substanz (13) mehr als 5 Ma.-%, vorzugsweise mehr als 10 Ma.-%, weiter bevorzugt mehr als 20 Ma.-%, bezogen auf die Masse des Feststoffes, beträgt.

6. Verfahren nach einem der vorhergehenden Ansprüche, **dadurch gekennzeichnet, dass** der Beladungsgradient auf dem Feststoff (10) mittels eines Gasgemischstroms (22) etabliert wird, der die mindestens eine zu adsorbierende Substanz (13) enthält.

7. Verfahren nach einem der vorhergehenden Ansprüche, **dadurch gekennzeichnet, dass** ein weiterer vom Feststoff (10) verschiedener Feststoff, der mit der adsorbierten Substanz (13) beladen ist, mittels eines Gasstroms entladen wird und der mit der desorbierten Substanz (13) beladene Gasstrom durch den Feststoff (10) im Feststoffbett (11) zur Erzeugung des Beladungsgradienten geleitet wird.

8. Verfahren nach einem der vorhergehenden Ansprüche, **dadurch gekennzeichnet, dass** der Feststoff (10) im Feststoffbett (11) ein poröses Material, vorzugsweise ein γ-Aluminiumoxid, poröse Metalloxide, Silikagel, Aktivkohle, ein Zeolith oder eine Mischung dieser Stoffe, besonders bevorzugt ein hydrophiler Zeolith, insbesondere ein NaY-, NaX-, KA-, NaA-, ZSM-5- oder CaA-Zeolith, ist.

9. Verfahren nach einem der vorhergehenden Ansprüche, **dadurch gekennzeichnet, dass** die mindestens eine zu adsorbierende Substanz (13) ein organisches oder anorganisches Lösungsmittel, vorzugsweise ein organisches oder anorganisches polares Lösungsmittel, besonders bevorzugt Wasser ist.

10. Verfahren nach einem der vorhergehenden Ansprüche, **dadurch gekennzeichnet, dass** das Trägergas (24) ein trockenes Gas, vorzugsweise Stickstoff oder getrocknete Luft ist.

11. Verfahren nach einem der vorhergehenden Ansprüche, **dadurch gekennzeichnet, dass** eine hochfrequente elektromagnetische Strahlung mit einer Frequenz im Bereich von 1 MHz bis 50 MHz und besonders bevorzugt im Bereich von 1 MHz bis 30 MHz verwendet wird.

12. Vorrichtung zur Durchführung des Verfahrens nach einem der vorhergehenden Ansprüche, aufweisend
- ein Feststoffbett (11) mit mindestens einem Feststoff (10) mit einer ersten Öffnung (16) und einer zweiten Öffnung (18), jeweils geeignet zum Anströmen und/oder Abströmen eines Gases, wobei die erste Öffnung (16) im Anstrombereich (17) und die zweite Öffnung (18) im Abstrombereich (19) des Feststoffes (10) liegen,
- mindestens ein Strömungserzeugungsmittel (30) zur Erzeugung einer Luftströmung entlang der Längsrichtung des Feststoffbettes (11), wobei die Luftströmung von der ersten Öffnung (16) zur zweiten Öffnung (18) oder umgekehrt erfolgen kann, und
- ein Erwärmungsmittel zur dielektrischen Erwärmung des Feststoffbettes (11) mittels hochfrequenter elektromagnetischer Strahlung mit einer Frequenz im Bereich von 100 kHz bis 500 MHz, wobei das Erwärmungsmittel mindestens eine zur dielektrischen Erwärmung geeignete Elektrode (12, 14) aufweist.

13. Vorrichtung nach Anspruch 12, **dadurch gekennzeichnet, dass** im Anstrombereich (17) und/oder im Abstrombereich (19) ein Gassensor (32, 34), vorzugsweise ein erster und/oder zweiter Feuchtesensor, positioniert ist.

14. Vorrichtung na Anspruch 13, **dadurch gekennzeichnet, dass** die Vorrichtung zusätzlich
- ein erstes Steuerungsmittel (26) zur Steuerung des Erwärmungsmittels und/oder
- ein zweites Steuerungsmittel (36) zur Steuerung des Strömungserzeugungsmittels (30), wobei das zweite Steuerungsmittel (36) mit dem Strömungserzeugungsmittel (30), dem ersten Steuerungsmittel (26), dem ersten Feuchtesensor (32) und dem zweiten Feuchtesensor (34) verbunden ist,
aufweist.

15. Vorrichtung nach Anspruch 14, **dadurch gekennzeichnet, dass** das zweite Steuerungsmittel (36) eine Steuerungsfunktion aufweist, die derart ausgelegt ist, dass das Strömungserzeugungsmittel (30) eine Luftströmung von der ersten Öffnung (16) zur zweiten Öffnung (18) erzeugt bis der zweite Feuchtesensor (34) einen Wert oberhalb eines vorher festgelegten ersten Schwellenwertes anzeigt und nach Überschreiten des ersten Schwellenwertes das Strömungserzeugungsmittel (30) eine Luftströmung von der zweiten Öffnung (18) zur ersten Öffnung (16) erzeugt bis der erste Feuchtesensor (32) einen Wert unterhalb eines vorher festgelegten zweiten Schwellenwertes anzeigt und dass das Erwärmungsmittel während der Dauer der Luftströmung von der zweiten Öffnung (18) zur ersten Öffnung (16) aktiviert ist.
